# EUROPEAN PATENT APPLICATION

(11) **EP 4 654 097 A1**
(43) Date of publication of application: **26.11.2025**
(21) Application number: 24177647.5
(22) Date of filing: 23.05.2024
(51) Int. Cl.: G06Q 10/02, G06Q 10/06, G06Q 50/40, B64F 1/36

(54) **OFFLINE DEPARTURE CONTROL SYSTEM AND METHOD FOR SELF-SERVICE PASSENGER TERMINALS**

(71) Applicant: ICM Airport Technics Pty Ltd., Botany, NSW 2019 (AU)
(72) Inventor: SAVSANI, Tejas, Melbourne, 3029 (AU); HAVERFIELD, Andrew, Diamond Creek, 3089 (AU); SZE, Kiman, Footscray, 3011 (AU); NUNES, Cornel, Lower Templestowe, VIC, 3107 (AU)
(74) Representative: Samson & Partner Patentanwälte mbB

(57) **Abstract**

A passenger processing system (and associated method) associated with a travel facility in respect of travel service(s) for processing passenger operation(s) including updating passenger reservation records, comprising: an offline departure control system in data communication with one or more online departure control systems and one or more self-service terminals, the offline departure control system is configured to: monitor online and offline statuses of travel service(s); for each travel service having an online status: receive passenger data from an associated online departure control system enabling a determination of a current status of passenger records at for online passenger operation(s) controlled by the online departure control system, and generate (for new records) a most recent online snapshot of the travel service representing a state of the passenger reservation records for the travel service; and for each travel service having an offline status: generate (when entering offline status) an offline snapshot based on a most recent online snapshot for the travel service, and subsequently update the offline snapshot based on newly received passenger operation data.

## Description

### Field of the Invention

The invention generally relates to providing offline processing of passenger operations (e.g., passenger check-in and/or luggage drop) at a travel facility (e.g., airport) in respect of one or more travel services (e.g., flights).

### Background to the Invention

Airline departure control systems are known which provide computerised passenger check-in services. Additional services are usually offered, such as luggage drop. The airline departure control systems can also interface with self-service terminals such as self-service kiosks and self-service luggage stations to enable passengers to complete portions of the check-in procedure themselves, thereby improving overall throughput at the airport.

However, it is possible for an airline departure control system to become unavailable, for example through a hardware or network fault, or for scheduled maintenance. In these cases, self-service operations may be suspended in favour of employee assisted check-in. Such suspension is problematic both from the perspective of the airport and airline, as well as that of the passengers.

Reference herein to background art is not an admission that the art forms a part of the common general knowledge of the person skilled in the art, in Australia or any other country.

### Summary of the Invention

According to an aspect of the present invention, there is provided a passenger processing system for processing one or more passenger operations at a travel facility in respect of one or more travel services, wherein the one or more passenger operations include updating passenger reservation records associated with passengers utilising the respective travel services, the passenger processing system comprising: an offline departure control system in data communication with one or more online departure control systems and one or more self-service terminals, wherein the offline departure control system is configured to: monitor a status of each of the one or more travel services, said status selected from: an online status; and an offline status; for each travel service having an online status: receive passenger data from the online departure control system associated with the travel service, said passenger data enabling a determination of a current status of passenger records at the time of communication of the passenger data for the one or more online passenger operations controlled by the online departure control system, and in response to receiving new passenger data, generate a most recent online snapshot of the travel service based on the received passenger data, wherein the online snapshot represents a state of the passenger reservation records for the travel service at the time at which the passenger data was communicated from the associated online departure control system; and for each travel service having an offline status: in response to determining a change in mode from the online mode to an offline mode for the travel service, generate an offline snapshot based on the most recent online snapshot for the travel service, and subsequently update the offline snapshot based on newly received passenger operation data received from the self-service terminals, such that the offline snapshot comprises a record of updates to the passenger reservation records for the travel service.

Typically, the online departure control systems are arranged to control one or more online passenger operations in respect of at least one travel service associated with the particular online departure control system to thereby update passenger reservation records for the at least one travel service.

Typically, the self-service terminals are arranged to enable passengers to undertake self-service for one or more passenger operations, each self-service terminal in data communication with at least one of the one or more online departure control systems.

Optionally, the passenger processing system comprises the one or more online departure control systems. Optionally, the passenger processing system comprises the one or more self-service terminals.

In an embodiment, the offline departure control system is further configured to, in response to determining a change in mode from the online mode to an offline mode for the travel service, instruct at least one self-service terminal to undertake offline passenger operations in respect of the travel service. The offline departure control system may be configured to: receive status requests, each identifying a respective flight, from the self-service terminals; and for a particular status request, respond to the sending self-service terminal with an instruction for the self-service terminal to undertake online passenger operations or offline passenger operations in dependence with the current mode of the flight.

A passenger operation may correspond to passenger check-in. In this case, at least one self-service terminal may correspond to a kiosk for enabling self-service passenger check-in. A passenger operation may correspond to a luggage drop service for passenger luggage. In this case, at least one self-service terminal may correspond to a luggage drop station for enabling self-service passenger luggage drop.

Optionally, the offline departure control system is also in data communication with one or more workstations located at the travel terminal, each workstation arranged to enable authorised users to undertake one or more passenger operations on behalf of passengers. The passenger processing system may comprise the one or more workstations. In an embodiment, for each travel service having the offline status, the offline departure control system is configured to: in response to determining a change in mode from the online mode to an offline mode for the travel service: instruct at least one workstation to undertake offline passenger operations in respect of the travel service, and subsequently continuously update the offline snapshot based on newly received passenger operation data received from the at least one workstation, such that the offline snapshot comprises a record of updates to the passenger reservation records for the travel service. At least one workstation may be configurable to enable an authorised user to modify at least one offline snapshot.

Optionally, each travel service in the offline mode is unable to be changed to the online mode. Optionally, all travel services of a particular online departure control system are either in the online mode or offline mode simultaneously.

In an implementation, the travel facility is an airport and the one or more travel services are flights. In this case, an online snapshot and/or an offline snapshot may include flight information and manifest data or information from which flight information and manifest data can be determined for its respective travel service.

Optionally, the offline departure control system is configured to receive and forward data communications between the one or more online departure control systems and the one or more self-service terminals for each travel service having the online status, such that the offline departure control system acts as a proxy for data communications between the one or more online departure control systems and the one or more self-service terminals.

In an implementation, at least one self-service terminal is configured to present an interface comprising indicia associated with a provider of a travel service when in the offline mode for that travel service.

According to another aspect of the present invention, there is provided a passenger processing method for processing one or more passenger operations at a travel facility in respect of one or more travel services, wherein the one or more passenger operations include updating passenger reservation records associated with passengers utilising the respective travel services, the method comprising: monitoring a status of each of the one or more travel services, said status selected from: an online status; and an offline status; for each travel service having an online status: receiving passenger data from an online departure control system associated with the travel service, said passenger data enabling a determination of a current status of passenger records at the time of communication of the passenger data for the one or more online passenger operations controlled by the online departure control system, and in response to receiving passenger data, generating a most recent online snapshot of the travel service based on the received passenger data, wherein the online snapshot represents a state of the passenger reservation records for the travel service at the time at which the passenger data was communicated from the associated online departure control system; and for each travel service having an offline status: in response to determining a change in mode from the online mode to an offline mode for the travel service, generating an offline snapshot based on the most recent online snapshot for the travel service, and subsequently update the offline snapshot based on newly received passenger operation data received from the at least one self-service terminals, such that the offline snapshot comprises a record of updates to the passenger reservation records for the travel service.

Typically, each online departure control system is arranged to control one or more online passenger operations in respect of at least one travel service associated with the particular online departure control system to thereby update passenger reservation records for the at least one travel service, and

Typically, each self-service terminal is arranged to enable passengers to undertake self-service for one or more passenger operations, each self-service terminal in data communication with at least one of the one or more online departure control systems.

Optionally, the method is implemented by an offline departure control system in data communication with the one or more online departure control systems and the one or more self-service terminals.

In an embodiment, in response to determining a change in mode from the online mode to an offline mode for the travel service, the method comprises instructing at least one self-service terminal to undertake offline passenger operations in respect of the travel service. The method may comprise the steps of: receiving a status request identifying a respective flight from a particular self-service terminal; and responding to the particular self-service terminal with an instruction for the self-service terminal to undertake online passenger operations or offline passenger operations in dependence with the current mode of the flight.

A passenger operation may correspond to passenger check-in. In this case, at least one self-service terminal may correspond to a kiosk for enabling self-service passenger check-in. A passenger operation may correspond to a luggage drop service for passenger luggage. In this case, at least one self-service terminal corresponds to a luggage drop station for enabling self-service passenger luggage drop.

Optionally, the method comprises: undertaking data communication with one or more workstations located at the travel terminal, each workstation arranged to enable authorised users to undertake one or more passenger operations on behalf of passengers. In an embodiment, the method further comprises, for each travel service having the offline status: in response to determining a change in mode from the online mode to an offline mode for the travel service: instructing at least one workstation to undertake offline passenger operations in respect of the travel service; subsequently continuously updating the offline snapshot based on newly received passenger operation data received from the at least one workstation, such that the offline snapshot comprises a record of updates to the passenger reservation records for the travel service. At least one workstation may be configurable to enable an authorised user to modify at least one offline snapshot.

Optionally, each travel service in the offline mode is unable to be changed to the online mode. Optionally, all travel services of a particular online departure control system are either in the online mode or offline mode simultaneously.

In an implementation, the travel facility is an airport and the one or more travel services are flights. An online snapshot and/or offline snapshot includes flight information and manifest data or information from which flight information and manifest data can be determined for its respective travel service.

Optionally, the method comprises receiving and forwarding data communications between the one or more online departure control systems and the one or more self-service terminals for each travel service having the online status.

In an implementation, at least one self-service terminal is configured to present an interface comprising indicia associated with a provider of a travel service in response to receiving an instruction to operate in the offline mode for that travel service.

A computer program may be provided comprising code configured to cause a processor to implement the method of the previous aspect when said code is executed by said processor. A computer readable storage medium may be provided storing the code.

According to another aspect of the present invention, there is provided a self-service terminal configured to communicate with the offline departure control system of the passenger processing system of the first aspect, wherein the self-service terminal is arranged to enable passengers to undertake self-service for one or more passenger operations.

In an embodiment, during a particular instance of a passenger undertaking self-service for one or more passenger operations in relation to a particular flight, the self-service terminal is configured to determine a status of the particular flight selected from an online status and an offline status, and wherein the self-service terminal is configured to communicate with the offline departure control system upon determining that the flight has an offline status. Typically, the departure control system may be configured to communicate with an online departure control system associated with the flight upon determining that the flight has an online status.

As used herein, the word "comprise" or variations such as "comprises" or "comprising" is used in an inclusive sense, i.e., to specify the presence of the stated features but not to preclude the presence or addition of further features in various embodiments of the invention.

### Brief Description of the Drawings

One or more embodiments of the present invention will hereinafter be described with reference to the accompanying figures, in which:
**Figure 1** shows a passenger processing system according to an embodiment;
**Figure 2** shows a schematic representation of an offline departure control system;
**Figure 3** shows a passenger processing method according to an embodiment;
**Figures 4A and 4B** show an online mode of operation of the offline departure control system, according to embodiments;
**Figure 5** shows an offline mode of operation of the offline departure control system, according to embodiment; and
**Figure 6** shows a method for operating a self-service terminal.

### Description of Embodiments

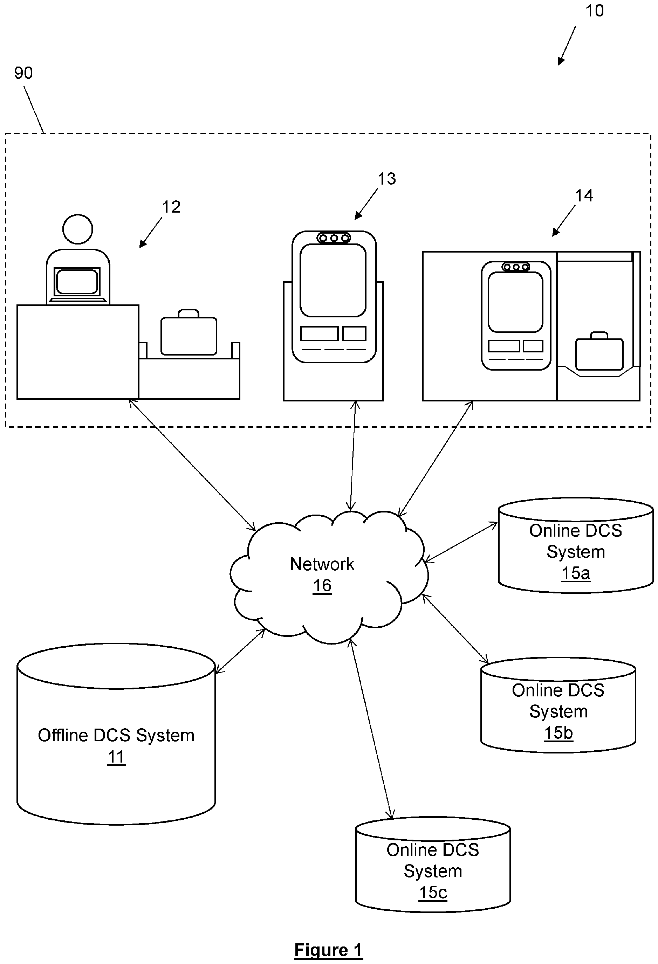

**Figure 1** shows a passenger processing system 10, which can be implemented at a travel facility, for example, an airport. The system 10 enables processing of one or more "passenger operations", such as passenger check-in and luggage drop, in order to facilitate processing passengers for travel services (e.g., flights) offered at the travel facility. For example, a passenger can be associated with a "passenger reservation record" (e.g., a booking record or other electronic record representing a passenger's booking including its current status). The passenger reservation record is updated as the passenger progresses through the travel facility, for example updates resulting from checking in the passenger for the particular travel service or registering the passenger's luggage via a luggage drop procedure. Although reference in made herein to "updating" a passenger reservation record, it should be understood that a separate record is created relating to the passenger's actions in preparing for the travel service. Generally, the final "passenger reservation record" can correspond to one or more separate records which together represent the processed passenger.

Additionally, the system 10 comprises an offline departure control system 11 interfaced with various services 90 associated with the travel facility. For the purposes of clearly exemplifying embodiments, it is assumed herein that the travel facility is an airport and that the associated travel services are flights.

In a general sense, the services 90 can include a passenger operation corresponding to passenger check-in utilising check-in workstations 12 ("workstation 12") and self-service terminals comprising self-service kiosks 13 ("kiosk 13"). Both workstations 12 and kiosks 13 are associated with computer programs and computer hardware enabling the respective functionalities. Additionally, which in particular can be applicable to kiosks 13, there can be associated non-computer hardware contributing to the offering of the service, such as signage, physical shape, and formfactor, etc. Self-service check-in via kiosks 13 allows for passengers to check-in, for example, to flight services at airport 90 without requiring interaction with a representative of the respective airline. This can be contrasted with check-in procedures at a workstation 12 staffed by an employee of the airline, which require a direct interaction between customer and employee (i.e., are not "self-service"). Typically, a workstation 12 implements additional functionality to that of a kiosk 13-for example, a workstation 12 can include service monitoring and/or agent override functionality. For example, a particular workstation 12 can implement various different functions in dependence on a particular employee's authorisation.

The services 90 can also (or alternatively) include a passenger operation corresponding to luggage drop, for example provided as an additional function of workstations 12-that is, luggage drop can be facilitated by employees operating said workstations 12 utilising functionality of the workstations 12. Additionally, or alternatively, luggage drop can be facilitated at one or more self-service terminals comprising self-service luggage drop stations 14 ("luggage station 14"). Luggage drop services allow for passenger luggage to be processed and sent to the airport's luggage handling system (not shown). Typically, luggage drop services require received luggage items to be accurately labelled (e.g., using an adhesive label comprising computer readable indicia) to ensure the luggage is identifiable as associated with its passenger and to ensure that the luggage handling system correctly processes and communicates the luggage to the correct flight.

**Figure 1** also shows the offline departure control system 11 in data communication with one or more existing airline departure control systems 15 (herein referred to as "online" departure control system 15). It should be understood that the one or more online departure control systems 15 can include offerings by non-airline entities (e.g., entities that provide departure control systems to airlines but not airlines themselves). For example, such services as Amadeus^{™} Altéa^{™} DCS and navitaire^{™} New Skies^{™} DCS.

As shown, the data communications described can include data communication via a network 16 that can include the Internet or may be limited to a suitable intranet or collection of intranets only. The concept of a network 16 is not intended to be limiting; for example, one or more of the data communications can be direct data communications, for example via a dedicated serial bus. Any, and more preferably all, data communications can be encrypted (for example, utilising Hypertext Transfer Protocol Secure (HTTPS)). Additionally, certain data communication can require authorisation (where the authorisation can be required for data decryption).

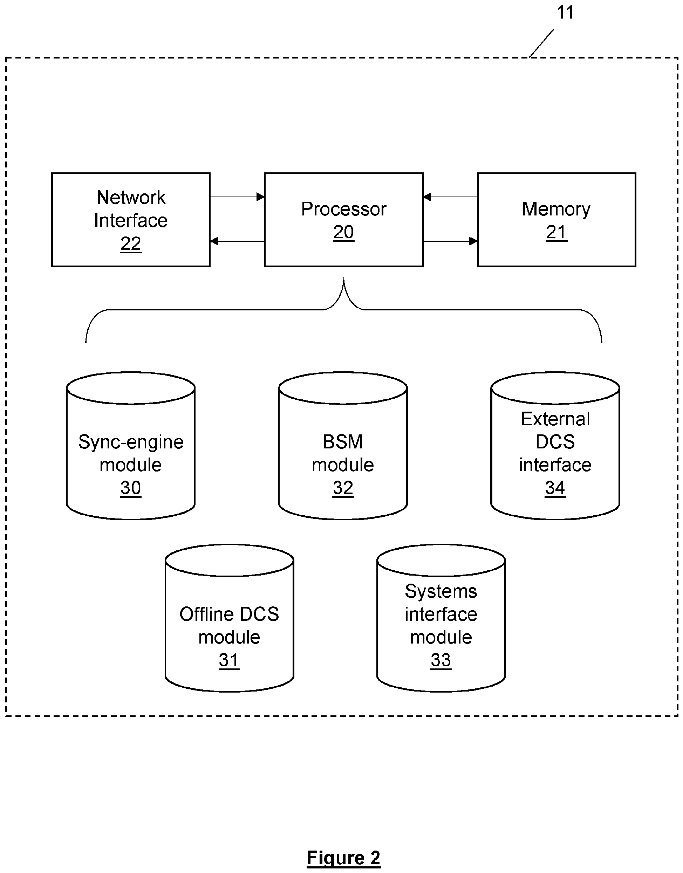

**Figure 2** shows an exemplary representation of offline departure control system 11. The offline departure control system 11 comprises computer implemented functionality and for the purposes of the present disclosure is broadly understood to comprise a processor 20 which is interfaced with a memory 21 and a network interface 22. However, the processor 20 should be understood as including one or more central processing units (CPUs) which can be implemented within dedicated server hardware or within a distributed computing environment (such as a "cloud" architecture). Similarly, the processor 20 can correspond to one or more virtual processing units of a virtual server architecture. Generally, the processor 20 represents processing capacity for executing software instructions. The memory 21 should be understood as including implementations with dedicated memory hardware or shared memory (such as that made available in a cloud or virtual server architecture). Relevantly, the memory 21 is typically understood to include a storage memory for ongoing storage of data and program instructions for use by the processor 20 and a working memory 21 comprising data and program instructions for immediate access by the processor 20-for example, data and program instructions can be moved between the storage memory and working memory when needed. The memory 21 can comprise multiple physically and/or logically distinct memories. The program instructions can, for example, be stored (or storable) on a computer readable storage medium such as a magnetic (HDD) or solid-state hard drive (SSD), a FLASH memory, an optical storage such as a CD or DVD, a magnetic tape storage, or any other suitable nonvolatile memory storage.

The network interface 22 is understood to comprise one or more physical and/or logical interfaces enabling data communication between the offline departure control system 11 and external computing devices. The network interface 22, for example, can comprise an ethernet port of interfacing with an intranet or the Internet and implementing (for example) the TCP/IP stack. The network interface 22 can also, or alternatively, implement proprietary data communication protocols. Generally, the network interface 22 should provide the offline departure control system 11 with the capability of performing the data communications described herein. As mentioned above, at least some of the data communication can be via non-networked means such as a direct serial bus; the network interface 22 should be understood as inclusive of such non-networked means.

As shown in **Figure 2****,** the offline departure control system 11 can implement several modules depending on the embodiment. In the embodiment shown, the offline departure control system 11 implements a sync-engine module 30, offline DCS module 31, and baggage sortation message (BSM) module 32. The offline departure control system 11 is configured for (at least) two modes of operation for each flight: online mode; and offline mode. Therefore, the offline departure control system 11 can operate simultaneously the offline mode in respect of select one or more flights ("online flights") and the online mode in respect of another selection of one or more flights ("offline flights").

Regarding terminology used herein, as already mentioned, the offline departure control system 11 can operate in an "offline mode" or "online mode" in respect of a particular flight. A flight is referred to as an "offline flight" when the offline departure control system 11 is operating in the offline mode for that particular flight. Similarly, a flight is referred to as an "online flight' when the offline departure control system 11 is operating in the online mode for that particular flight. For example, all flights can be assumed to be online flights (i.e., associated with the online mode) unless specifically changed to be an offline fight. Said another way, a flight is, by default, an online flight unless specifically set to be an offline flight.

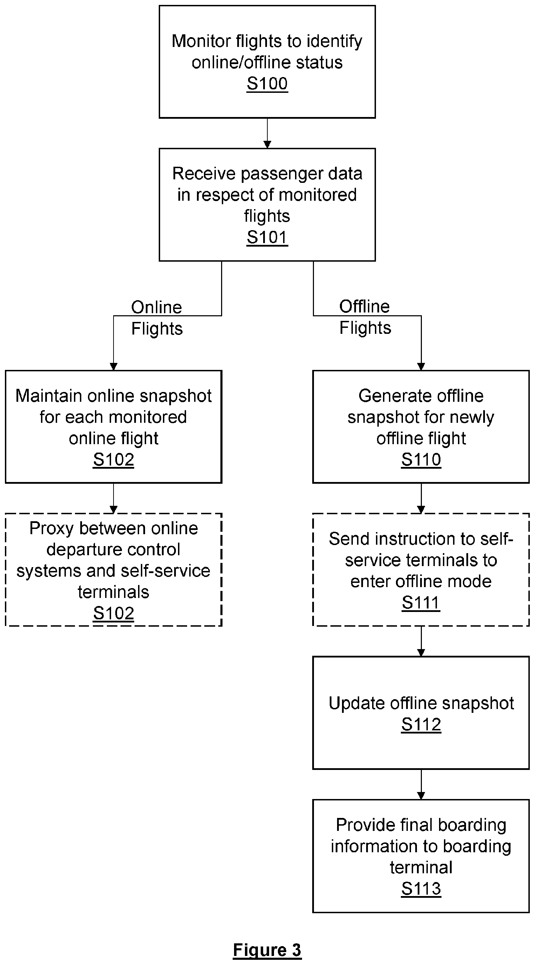

**Figure 3** shows an exemplary passenger processing method applicable to one or more embodiments. Broadly, the method defines different actions depending on whether a particular travel service (e.g., particular flight) has an online status (e.g., is an online flight) or an offline status (e.g., is an offline flight).

At step S 100, the status of each of one or more flights is monitored such that each flight is identified as an online flight or offline flight. The status can change during monitoring.

### Online Mode

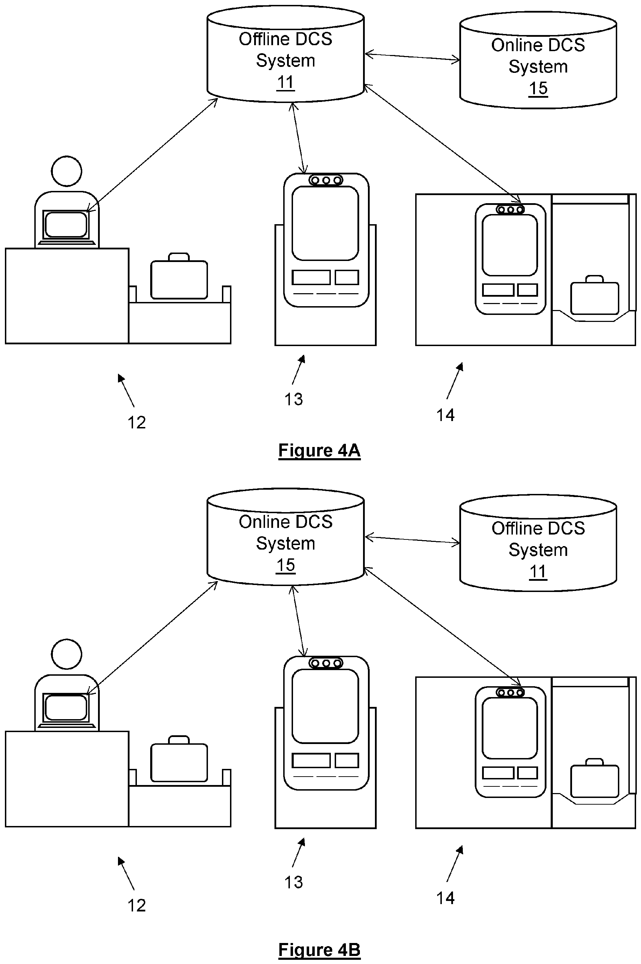

**Figures 4A** and **4B** show a schematic representations of the offline departure control system 11 operating in its online-mode according to two arrangements. Except where indicated otherwise, the following disclosure is applicable to the two arrangements.

The offline departure control system 11 is in data communication with one or more online departure control systems 15 (one is shown in **Figures 4A and 4B**, whereas three are shown in **Figure 1**). Reference herein to communications between the offline departure control system 11 and a single online departure system 15 should be understood, unless expressly stated to the contrary, to include communications between the offline departure control system 11 and one or more online departure control systems 15 (e.g., as shown in **Figure 1**).

With reference to **Figure 3**, the sync-engine module 30 is configured to receive "up-to-date" passenger data from the online departure control system 15 at step S101. That is, passenger data representing a most recent (or at least, substantially most recent) status of all passengers undertaking one or more online passenger operations via the respective online departure control system 15a-15c. In an embodiment, the passenger data is receivable at different times and/or frequencies for different online departure control systems 15.

The passenger data can be communicated continuously to the sync-engine module 30, although more typically, the passenger data can be communicated (optionally in batches) on a periodic or intermittent basis. An example of an intermittent communication is one that is initiated in response to an external instruction to send the passenger data to the sync-engine module 30. Therefore, at any specific time, the sync-engine module 30 is operating on the basis of the most recently received passenger data. The timing of the communication of passenger data can vary depending on the time remaining before a particular flight is intended to depart. For example, kiosk(s) 13 and/or luggage station(s) 14 (and typically workstation(s) 12) can be made available for passenger operations for a specific flight at a specified time before the expected departure time for that flight (e.g., 72 hours beforehand). The frequency of expected passenger operations for the specific flight can be expected to be low to begin, with the frequency increasing closer to the flight's expected departure time. Therefore, initially, the passenger data for the specific flight can be communicated relatively infrequently (for example, every 60 minutes). Then, for example, when it is less than 24-hours until the expected flight departure time, the period can be increased (for example, to every 30 minutes). Such reductions in period can occur multiple times. For example, with 6-hours until the expected flight departure time, the period can be increased again (for example, to every 10 minutes) and then, with 3-hours until the expected flight departure time, the period can be increased again (for example, to every 1 minute). In one implementation, the passenger data is transmitted periodically with a period between 30 seconds and 1 minute when the expected departure time of the specific flight is imminent. Generally, the particular timings between communication of passenger data for specific flights can be determined based on commercial and/or technical considerations in dependence on the particular implementation. The examples periods stated above can be understood as average periods.

At step S 102, the sync-engine module 30 is configured to maintain an "online snapshot" for each current online flight. The online snapshots can be considered "up-to-date" when they accurately represent the current information in relation to the passenger operations stored in the respective online departure control systems 15 (e.g., to within a tolerance accounting for delays in the communication of passenger data). Thus, the term "online snapshot" corresponds to a representation of the passenger data at a particular instance for particular flights.

In an embodiment, the sync-engine module 30 is configured to synchronise flight information and manifest data of the online departure control system 15; that is, the online snapshot(s) represent their respective flight's flight information and manifest data. To this end, the passenger data comprises information suitable for synchronising these elements-this can be direct representations of the flight information and manifest data or data from which the flight information and manifest data can be reconstructed. The flight information and manifest data can be communicated, at least in part, using standard and/or extended or customised IATA PNL/ADL messages.

In an embodiment, the sync-engine module 30 is configured to receive the passenger data, optionally pre-process it (if necessary), and update a sync database maintained by the sync-engine module 30 in accordance with said received passenger data. In a case where the received passenger data includes information regarding a flight not already present within the sync database, a new sync database record can be created to reflect the newly received passenger data for said flight. In a case where the received passenger data includes information regarding a flight already present within the sync database, a previously created sync database record can be updated to reflect the newly received passenger data while retaining information regarding previously received passenger data for said flight. In certain cases, at least a portion of existing passenger data for a particular flight can be replaced; for example, due to an operator command issued at a workstation 12.

Therefore, while in the online mode, the sync-engine module 30 is configured for receiving passenger data from the online departure control system 15 and storing new and updated information in its sync database. Relevantly, the passenger data reflects information, such as the flight information and manifest data, associated with specific flights-in this sense, the sync database can be understood to reference database elements by flight (i.e., travel service) and airline (although, in practice, the airline can be inferred from the flight). More generally, the passenger data should be suitable for enabling the offline departure control system 11 to implement its offline mode, as described below. Each sync database record can therefore be understood as corresponding to the online snapshot for the associated flight.

Advantageously, in an embodiment, when operating in the online mode, the offline departure control system 11 does not cause substantive changes in workflow for the existing airport systems such as the online departure control systems 15 and their interactions with the workstation(s) 12, kiosk(s) 13, and/or luggage station(s) 14. The offline departure control system 11 is configured to receive passenger data from the one or more online departure control systems 15 and to store and update this information upon reception.

In an embodiment, offline departure control system 11 is configured to implement a systems interface module 33. The systems interface module 33 is configured to provide a communications interface for communications between the offline departure control system 11 and the online departure control systems 15.

The systems interface module 33 can therefore be modelled as comprising an external DCS interface 34 which receives data communications with one or more online departure control systems 15. Relevantly, the external DCS interface 34 is configured for receiving the data communications in a format (or formats) for which the relevant online departure control systems 15 are already configured. In this way, the external DCS interface 34 can advantageously alleviate the need to modify the operation of the various online departure control systems 15. As noted already, the online departure control systems 15 are typically arranged to communicate certain information to nominated recipients; in such cases, the online departure control 15 can be configured simply to communicate relevant information to the external DCS interface 34.

In an embodiment, the systems interface module 33 is configured to convert received information from online departure control systems 15, where necessary, into a common format defined for the offline departure control system 11. The converted airline information is then made available to the other modules of the offline departure control system 11, in particular the sync-engine module 30.

Therefore, the systems interface module 33 can comprise conversion rules for at least one of the online departure control systems 15 defining the manner in which the information communicated by the respective online departure control system 15 is to be converted. Advantageously, the conversion rules further alleviate the need to modify the operation of the various online departure control systems 15. In an implementation, the conversion rules are created for each online departure control system 15 (although, of course, different online departure control systems 15 can effectively be associated with the same conversion rules-this may apply, for example, where the airlines share a common departure control platform supplied by a common provider). In an implementation, the conversion rules include algorithmic steps to decide upon an appropriate conversion if an ambiguity exists (e.g., where there is not a specific one-to-one relationship between the format of the information sent by an online departure control system 15 and the common format). The relevant information to be communicated to the external DCS interface 34 is that suitable for, at the very least, enable synchronisation using the sync-engine module 30. The conversion rules are therefore configured to ensure determination of such synchronisation information.

Referring to **Figure 4A****,** in an embodiment, for online flights, the offline departure control system 11 acts as a proxy between the one or more kiosks 13 and/or one or more luggage stations 14 (and optionally one or more workstations 12) and the relevant online departure control systems 15. For example, the systems interface module 33 (see **Figure 2**) can be configured to forward data communications received from the one or more kiosks 13 and/or one or more luggage stations 14 to the relevant online departure control system(s) 15 identified with the data communications. Similarly, the systems interface module 33 can be configured to forward data communications received from the online departure control systems 15 to the relevant kiosk(s) 13 and/or luggage station(s) 14 identified with the data communications. In this embodiment, the data communications can include address information identifying an indented recipient which can be read by the systems interface module 33, enabling forwarding. The offline departure control system 11 can be configured to keep a record of additional information (with respect to that required for the online snapshot) derived from said data communications. For example, such additional information can be stored in a suitable log within the memory 21 of the offline departure control system 11. Such operation as a proxy is represented as optional step S103 in **Figure 3****.**

This is in contrast to the embodiment shown in **Figure 4B****,** in which data communication between the one or more online departure control systems 15 and the offline departure control system 11 follow independent communication paths to the data communications between the one or more kiosks 13 and/or one or more luggage stations 14 (and optionally one or more workstations 12) and the one or more online departure control systems 15.

Depending on the implementation, within a particular travel facility (e.g., airport), there can be a mixture of the **Figure 4A** and the **Figure 4B** arrangements).

Generally, the systems interface module 33 and sync-engine module 30 operate together to ensure that the sync database reflects up-to-date online snapshots of respective online departure control systems 15 via the passenger data received from each online departure control system 15.

### Offline Mode

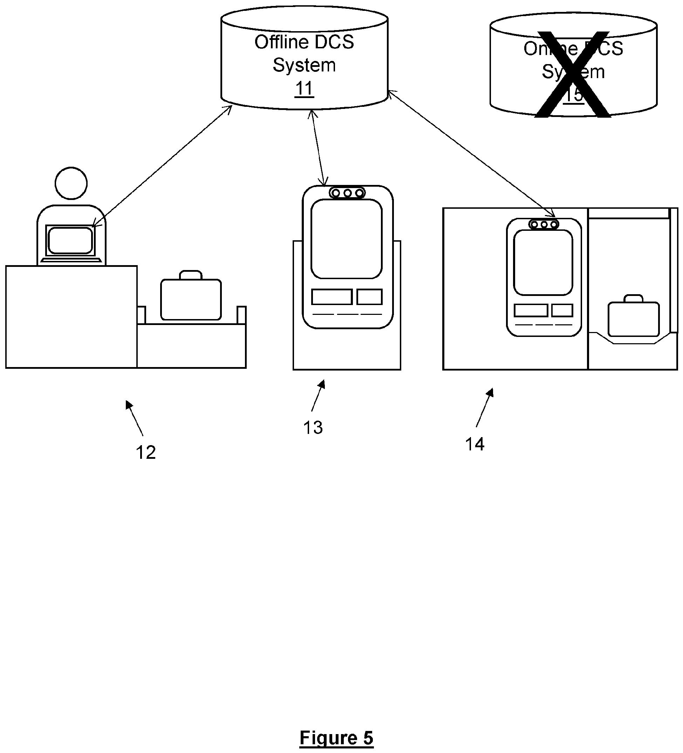

**Figure 5** shows a schematic representation of the offline departure control system 11 operating in an offline mode for at least one offline flight. Typically, it is expected that the offline departure control system 11 operates in the online mode for all flights for the majority of the time it is in operation. However, certain situations can require operation of the offline departure control system 11 in its offline mode for one or more offline flights.

In an embodiment, the offline departure control system 11 is configured to identify when a particular flight becomes unavailable and to automatically enter offline mode in respect of that particular flight. For example, the particular online departure control system 15 associated with the particular flight may become unresponsive due to a failure of the online departure control system 15 and/or the network 16, which is detectable by the offline departure control system 11. In this particular example, it may be expected that multiple flights become offline flights at approximately the same time-for example, all of the flights associated with the particular online departure control system 15.

In an embodiment, an operator is enabled, via a suitable user interface, to select a particular flight to put it into offline mode irrespective of whether the relevant online departure control system 15 is unavailable. For example, such an operator enabled functionality may be beneficial for a planned downtime of the relevant online departure control system 15. The operator can be enabled to schedule a change to offline mode operation for the flight. The user interface is typically suitable for allowing the operator to designate several offline flights at the same time; for example, all those associated with a particular online departure control system 15. The user interface is any suitable interface for enabling an operator to designate or schedule one or more flights as offline flights-for example, said user interface can be provided by a workstation 12 or an independent computer interface specifically configured to interacting with the offline departure control system 11.

In a broad sense, the offline departure control system 11 is configured to take over at least some functionality of the one or more self-service terminals (said functionality related to processing one or more passenger operations)-for example, the offline departure control system 11 can be configured to take over "self-service" check-in via the one or more kiosks 13 and/or "self-service" luggage drop via the one or more luggage stations 14. This may be particularly advantageous in situations where the kiosk(s) 13 and/or luggage station(s) 14 service multiple different online departure control systems 15-for example, where the kiosk(s) 13 and/or luggage station(s) 14 are provided/operated (for example) by the airport 90 rather than the particular airlines. In this scenario, it is likely that a subset of flights serviced by the kiosk(s) 13 and/or luggage station(s) 14 will be offline flights at any particular point in time. For example, in terms of existing online departure control systems 15, it is known that a particular kiosk 13 can be configured to provide check-in functionality for multiple airlines, which can be associated with multiple online departure control systems 15. Similarly, it is known that a particular luggage station 14 can be configured to provide check-in functionality for multiple airlines, which can be associated with multiple online departure control systems 15. Protocols such as Common Use Terminal Equipment (CUTE), Common Use Passenger Processing System (CUPPS), and Common Use Self-Service (CUSS) allow for multiple airline applications to run on the same particular kiosk 13 and/or luggage station 14.

In response to determining a change from online mode to offline mode for a particular flight, the offline departure control system 11 utilises the most recent online snapshot associated with the flight to take over processing of one or more passenger operations. The offline departure control system 11 generates an offline snapshot for the flight (see step S110 of **Figure 3**). Preferably, the offline snapshot is a distinct data structure for ongoing processing, although the generated offline snapshot can be the flight's most recent online snapshot. For the purpose of this disclosure, the offline departure control system 11 is described as creating modifications to the offline snapshot for a particular offline flight.

In an embodiment, the offline departure control system 11 communicates to one or more kiosks 13 and/or one or more luggage stations 14 with an instruction to enter the offline mode for a selected flight (see optional step S111 of **Figure 3****)-**although all kiosks 13 and/or luggage stations 14 in an airport can receive said instruction, the offline departure control system 11 can be configured to selectively communicate the instruction to specific one or more kiosks 13 and/or one or more luggage stations 14 associated with the flight. In another embodiment, the one or more kiosks 13 and/or one or more luggage stations 14 are not provided information to enter a different mode of operation as such; the offline departure control system 11 can effectively interface with the one or more kiosks 13 in its offline mode in a manner transparent to the one or more kiosks 13 (for example, by presenting itself as the online departure control system 15 associated with the offline flight).

In an embodiment, the one or more kiosks 13 and/or one or more luggage stations 14 are configured to communicate with the offline departure control system 11 each time a passenger attempts to perform an applicable passenger operation. For example, each time a passenger attempts a check-in procedure at a kiosk 13 or a bag-drop procedure at a luggage station 14. Considering a particular kiosk 13, a passenger can interact with the kiosk 13 to initiate check-in, including providing flight information. The kiosk 13, upon receiving said flight information, is then configured to communicate the flight information to the offline departure control system 11. The offline departure control system 11 is configured to respond to said communication with an indication of whether the flight is an online flight or an offline flight. The kiosk 13 is configured to communicate with the relevant online departure control system 15 to effect passenger check-in if the response indicates that the flight is an online flight. In contrast, the kiosk 13 is configured to communicate with the offline departure control system 11 to effect passenger check-in if the response indicates that the flight is an offline flight. This embodiment may be advantageous in that the kiosks 13 themselves are not required to maintain, in memory, information identifying currently online and offline flights for all flights serviced by said kiosks 13. Instead, said information is provided on an as-needed basis.

The one or more kiosks 13 and/or one or more luggage stations 14 undertake one or more "offline" passenger operations in respect of a particular offline flight by undertaking data communication with the offline departure control system 11.

The offline departure control system 11 activates the offline DCS module 31 to implement offline mode for the offline flight. Additionally, the offline departure control system 11 causes incoming passenger data associated with said flight, for example, as received from the one or more kiosks 13 and/or the one or more luggage stations 14, to be received by the offline DCS module 31. Therefore, in embodiments in which the offline departure control system 11 is acting as a proxy, it no longer forwards data communications from the one or more kiosks 13 and/or the one or more luggage stations 14 to the relevant online departure control system 15 of the offline flight.

In another embodiment, the offline departure control system 11 is configured to enter offline mode for all flights associated with a specific online departure control system 15-that is, the offline departure control system 11 does not allow both offline flight(s) and online flight(s) to be simultaneously active where those flights are associated with a particular online departure control system 15. This embodiment may advantageously reduce the risk of incorrect departure control on the basis that if an online departure control system 15 is unable to operate in respect with one or more flights, it is more likely to also be at risk of an error occurring with other flights (i.e., if the selected offline flights are due to a fault).

The offline DCS module 31 is configured to update the offline snapshot for the selected flight based on communications between the offline DCS module 31 and the one or more kiosks 13 and/or one or more luggage stations 14 in relation to the selected flight (e.g., see step S112 of **Figure 3**).

In an embodiment, once the selected flight becomes an offline flight, it is barred from returning to an online flight status. That is, even if the relevant online departure control system 15 becomes available (e.g., re-initiates data communication with the systems interface module 33), an offline flight is not changed to be an online flight. In an embodiment, where the relevant online departure control system 15 does become available, future flights managed by the online departure control system 15 (i.e., those that have not already been made offline) are operated as online flights. In this way, advantageously, the offline mode will only apply to a selected number of flights associated with a particular online departure control system 15 being those that were actively undergoing departure control at the time offline mode was initiated.

The offline DCS module 31 is configured to manage relevant passenger operation(s) in relation to the flight. In the examples that follow, said passenger operations comprise check-in (that is, as would normally occur at kiosks 13) and/or luggage drop (that is, as would normally occur at luggage stations 14).

Regarding check-in, the offline DCS module 31 is configured to enable passengers to undertake a check-in action at a kiosk 13 despite the unavailability of the online departure control system 15 associated with the particular offline flight. Typically, check-in includes at least a passenger identification process and a seat allocation process. Additional processes can also be implemented, such as selecting a number of items of check-in luggage. The DCS module 31 is responsible for generating a final passenger list suitable for use with a boarding procedure. Additionally, the final passenger list is typically stored for regulatory reasons (such as allowing identification of passenger identities on the flight subsequent to the flight). The final passenger list is typically generated from the offline snapshot, for example, based on the final form (after updates due to relevant passenger operation(s)) of the offline snapshot when the check-in process finishes.

The offline snapshot, at the time of entering offline mode, therefore includes information regarding passengers who have already been through check-in-that is, the offline snapshot can comprise check-in information including checked passenger identification information and checked passenger seat assignment information. Additionally, the offline snapshot includes an available passenger list defining passenger information. The offline snapshot can comprise additional information, such as checked passenger meal preferences.

Depending on the implementation, the final passenger list can comprise reduced information compared to that which would have been generated by the online departure control system 15 (i.e., had offline mode not been activated for the selected flight). However, the offline DCS module 31 is configured to generate a final passenger list comprising at least sufficient information to allow for accurate boarding. For example, the final passenger list generated by the offline DCS module 31 may not include certain optional information that is not strictly required for boarding.

Finally, at the completion of the passenger operations (e.g., at a specified time before boarding of a flight), the offline departure control system 11 makes the final version of the offline snapshot available to the boarding system (not shown)-that is, to enable boarding of the flight based on the checked in passengers. For example, this is shown at step S113 of **Figure 3****.** It should be noted that a copy of the offline snapshot is typically provided.

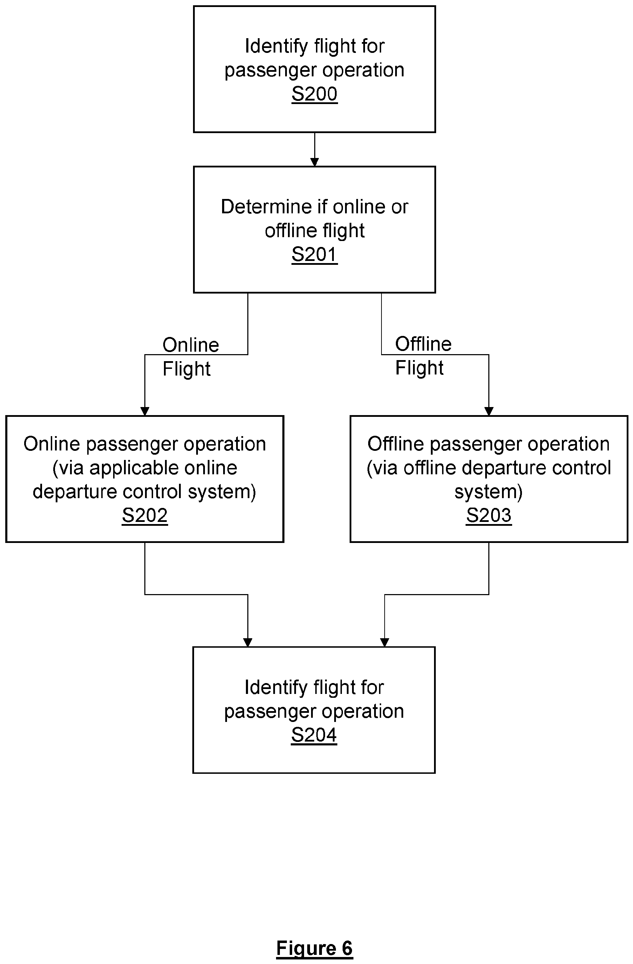

According to an embodiment, with referring to **Figure 6****,** a kiosk 13 is configured to provide a user interface from which a user (e.g., a passenger) can undertake a check-in procedure (a similar method may be implemented by a different self-service terminal such as a luggage station 14). Kiosks 13 known in the art can provide for check-in for multiple different airlines and includes functionality to determine the correct online departure control system 15 to access (e.g., in **Figure 1****,** which of online departure control system 15a-15c is associated with the passenger's information). Therefore, known kiosks 13 will require the passenger to input suitable identifying information (e.g., one or more of: full name, date of birth, airline membership number, and passport number). To this end, the kiosk 13 can be periodically updated with information identifying a particular flight with particular passengers ("lookup information") such as to enable the kiosk 13 to identify the passenger's flight based on the identifying information. Alternatively, or in addition, the kiosk 13 can be configured to enable the passenger to input information, via its user interface, specifying the passenger's flight.

Therefore, at flight identification step S200, the kiosk 13 is configured to identify a passenger's flight based on passenger input information (whether via lookup information previously provided to the kiosk 13 or via the passenger directly inputting the flight information).

At flight status step S201, the kiosk 13 is configured to determine whether the identified flight is an online flight or offline flight. As previously described, the kiosk 13 can assume that a flight is an online flight unless it has received notification that the flight is an offline flight. Alternatively, also as previously described, the kiosk 13 can communicate with the offline departure control system 11 in each instance after identifying the passenger's flight to determine whether the flight is an offline or online flight. If the kiosk 13 determines the flight is an online flight, then the passenger check-in can proceed according to known techniques (online flight check-in step S202)-typically, a suitable application on the kiosk 13 interfaces with the correct online departure control system 15 for the particular flight.

On the other hand, if the flight is determined to be an offline flight, then the kiosk 13 proceeds to offline flight check-in step S203. In one embodiment, the relevant existing airline kiosk application is modified to enable offline check-in by undertaking data communications with the offline departure control system 11. In another embodiment, the kiosk 13 is provided with an offline flight kiosk application which is executed for any offline flight (i.e., irrespective of the particular airline) and undertakes data communication with the offline departure control system 11. In either case, at step S203, the kiosk 13 performs passenger check-in via data communication with the offline departure control system 11 (e.g., with the offline DCS module 31 as described above).

In either case, once check-in is completed, the kiosk 13 returns to a generic check-in state and awaits a next passenger check-in event, at default state step S204.

In the embodiment in which the relevant existing airline kiosk application is modified, the information presented to the passenger during offline check-in can easily be the same, or substantially the same, as that would have presented during online check-in. The passenger can therefore be kept unaware that the check-in process is for an offline flight.

In the embodiment in which the kiosk 13 executes the offline flight kiosk application irrespective of which airline is associated with the offline flight, the offline flight kiosk application can advantageously be configurable to present an airline-specific offline interface via the user interface of the kiosk 13. Such an approach can be referred to as "white labelling". In this case, the offline flight kiosk application is configured to present a customised interface in dependence on the identified offline flight-for example, the kiosk 13 can be preconfigured with an offline interface for each airline associated with the kiosk 13, thereby enabling each airline to specify the interface to be presented by the offline flight kiosk application when undertaking offline check-in for an offline flight associated with the airline. In the event that an airline does not specify an interface, a default interface can be presented. Generally, whether an airline-specific offline interface or default offline interface is presented, the offline flight kiosk application is configured to obtain necessary information for enabling offline check-in as described herein.

In one particular example, airline-specific offline interfaces can be configured to cause display of the associated airline branding. Furthermore, the airline-specific offline interfaces can be configured to have an overall appearance the same as, or substantially the same as, that presented by the relevant airline online airline kiosk application.

White labelling can be advantageous as it enables each airline associated with a particular kiosk 13 to preconfigure the kiosk 13 to provide a similar experience whether the passenger is undertaking online or offline check-in for the particular airline. Thus, the passenger can be comforted in knowing that the check-in procedure is authentic and that the passenger is being checked-in to the correct airline.

In an embodiment, white labelling as described with respect to kiosks 13 is implemented by the luggage stations 14. That is, one or more luggage stations 14 are configured to provide a user interface from which a user (e.g., a passenger) can undertake a luggage drop procedure. Luggage stations 14 known in the art can provide for luggage drop for multiple different airlines and can therefore include functionality to determine the correct online departure control system 15 to access associated with the passenger's information (e.g., in **Figure 1****,** online departure control systems 15a-15c are shown in data communication with luggage station 14a). Therefore, known luggage stations 14 will require the passenger to input suitable identifying information (e.g., one or more of: full name, date of birth, airline membership number, passport number, and boarding number obtained during check-in). To this end, a luggage station 14 can be periodically updated with information identifying a particular flight with particular passengers ("lookup information") such as to enable the luggage station 14 to identify the passenger's flight based on the identifying information. Alternatively, or in addition, the luggage station 14 can be configured to enable the passenger to input information, via its user interface, specifying the passenger's flight. This latter embodiment can preferably require the passenger to input information obtained during check-in, such as a boarding number, to ensure that the passenger's luggage is associated with a passenger who has previously checked into the particular flight.

In an embodiment, workstations 12 are configured for communications with the online departure control systems 15 and offline departure control system 11 in dependence on whether a passenger's flight is an offline flight or online flight, in a similar manner as described with reference to kiosks 13 and luggage stations 14. However, as workstations 12 are operated by trained employees of particular airlines, the workstations 12 can be configured to provide a clear indication as to whether particular flights are offline or online. Additionally, workstations 12 are typically associated with a particular airline, and therefore, undertake data communication either with that airline's online departure control system 15 or the offline departure control system 11, and not other online departure control systems 15. Workstations 12 can be configured to use by employees of different airlines, however, in each instance the workstation 12 is only associated with the airline of the particular employee (e.g., based on running applications associated with that airline).

A workstation 15 can be enabled to undertake additional actions in relation to the check-in process, for example, by enabling employees to override existing check-in information. In relation to online flights, such additional actions can be implemented using existing techniques-in effect, the workstation 15 can interface directly with the relevant online departure control system 15 (whether or not the offline departure control system 11 is arranged as a proxy).

In relation to offline flights, the workstation 15 can be configured to undertake the additional actions through communications with the offline departure control system 11. For example, an additional action can correspond to an instruction, in effect, to modify the offline snapshot associated with the offline flight in a manner that might not be possible via the passenger operation(s) provided by the kiosk(s) 13 and/or luggage station(s) 14.

Several embodiments are described as comprising modules in order to conveniently describe as various functions of said embodiments, however the described specific function(s) attributed to specific module(s) is not intended to be limiting.

Reference signs in the claims are not to be construed as limiting the extent of the matter protected by the claims; their sole function is to aid easier understanding of the defined subject matter.

Further modifications can be made without departing from the spirit and scope of the specification.

## Claims

1. A passenger processing system (10) for processing one or more passenger operations at a travel facility (90) in respect of one or more travel services, wherein the one or more passenger operations include updating passenger reservation records associated with passengers utilising the respective travel services, the passenger processing system (10) comprising:
an offline departure control system (11) in data communication with one or more online departure control systems (15) and one or more self-service terminals (13, 14),
wherein the offline departure control system (11) is configured to:
monitor a status of each of the one or more travel services, said status selected from: an online status; and an offline status;
for each travel service having an online status:
receive passenger data from an online departure control system (15) associated with the travel service, said passenger data enabling a determination of a current status of passenger records at the time of communication of the passenger data for one or more online passenger operations controlled by the online departure control system (15), and
in response to receiving new passenger data, generate a most recent online snapshot of the travel service based on the received passenger data, wherein the online snapshot represents a state of the passenger reservation records for the travel service at the time at which the passenger data was
communicated from the associated online departure control system (15); and for each travel service having an offline status:
in response to determining a change in mode from the online mode to an offline mode for the travel service, generate an offline snapshot based on a most recent online snapshot for the travel service, and
subsequently update the offline snapshot based on newly received passenger operation data received from the self-service terminals (13, 14), such that the offline snapshot comprises a record of updates to the passenger reservation records for the travel service.

2. A passenger processing system (10) as claimed in claim 1, wherein the offline departure control system (11) is further configured to, in response to determining a change in mode from the online mode to an offline mode for the travel service, instruct at least one self-service terminal (13, 14) to undertake offline passenger operations in respect of the travel service,
optionally wherein the offline departure control system (15) is configured to:
receive status requests, each identifying a respective flight, from the self-service terminals (13, 14); and
for a particular status request, respond to the sending self-service terminal (13, 14) with an instruction for the self-service terminal (13, 14) to undertake online passenger operations or offline passenger operations in dependence with the current mode of the flight.

3. A passenger processing system (10) as claimed in claim 1 or claim 2, comprising:
a passenger operation corresponding to passenger check-in, and wherein at least one self-service terminal (13, 14) corresponds to a kiosk (13) for enabling self-service passenger check-in, and/or
a passenger operation corresponding to a luggage drop service for passenger luggage, and wherein at least one self-service terminal (13, 14) corresponds to a luggage drop station (14) for enabling self-service passenger luggage drop.

4. A passenger processing system (10) as claimed in any one of claims 1 to 3, wherein the offline departure control system (11) is also in data communication with one or more workstations (12) located at the travel terminal, each workstation (12) arranged to enable authorised users to undertake one or more passenger operations on behalf of passengers.

5. A passenger processing system (10) as claimed in any one of claims 1 to 4, wherein:
each travel service in the offline mode is unable to be changed to the online mode; and/or
all travel services of a particular online departure control system (15) are either in the online mode or offline mode simultaneously.

6. A passenger processing system (10) as claimed in any one of claims 1 to 5, wherein:
an online snapshot and/or offline snapshot includes flight information and manifest data or information from which flight information and manifest data can be determined for its respective travel service; and/or
the travel facility (90) is an airport and wherein the one or more travel services are flights.

7. A passenger processing system (10) as claimed in any one of claims 1 to 6, wherein at least one self-service terminal (13, 14) is configured to present an interface comprising indicia associated with a provider of a travel service when in the offline mode for that travel service.

8. A passenger processing method for processing one or more passenger operations at a travel facility in respect of one or more travel services, wherein the one or more passenger operations include updating passenger reservation records associated with passengers utilising the respective travel services, the method comprising:
monitoring (S100) a status of each of the one or more travel services, said status selected from: an online status; and an offline status;
for each travel service having an online status:
receiving (S101) passenger data from an online departure control system (15) associated with the travel service, said passenger data enabling a determination of a current status of passenger records at the time of communication of the passenger data for the one or more online passenger operations controlled by the online departure control system (15), and
in response to receiving passenger data, generating (S102) a most recent online snapshot of the travel service based on the received passenger data, wherein the online snapshot represents a state of the passenger reservation records for the travel service at the time at which the passenger data was communicated from the associated online departure control system (15); and
for each travel service having an offline status:
in response to determining a change in mode from the online mode to an offline mode for the travel service, generating (S110) an offline snapshot based on the most recent online snapshot for the travel service, and
subsequently (S112) update the offline snapshot based on newly received passenger operation data received from the at least one self-service terminals, such that the offline snapshot comprises a record of updates to the passenger reservation records for the travel service,
preferably wherein the method is implemented by an offline departure control system (11) in data communication with the one or more online departure control systems (15) and the one or more self-service terminals (13, 14).

9. A method as claimed in claim 8, further comprising the step of:
in response to determining a change in mode from the online mode to an offline mode for the travel service, instructing (S111) at least one self-service terminal (13, 14) to undertake offline passenger operations in respect of the travel service.

10. A method as claimed in claim 8 or 9, comprising:
a passenger operation corresponding to passenger check-in, and wherein at least one self-service terminal (13, 14) corresponds to a kiosk (13) for enabling self-service passenger check-in; and/or
a passenger operation corresponding to a luggage drop service for passenger luggage, and wherein at least one self-service terminal (13, 14) corresponds to a luggage drop station (14) for enabling self-service passenger luggage drop.

11. A method as claimed in any one of claims 8 to 10, comprising:
undertaking data communication with one or more workstations (12) located at the travel terminal, each workstation (12) arranged to enable authorised users to undertake one or more passenger operations on behalf of passengers.

12. A method as claimed in any one of claims 8 to 11, wherein:
each travel service in the offline mode is unable to be changed to the online mode; and/or
all travel services of a particular online departure control system (15) are either in the online mode or offline mode simultaneously.

13. A method as claimed in any one of claims 8 to 12, wherein:
an online snapshot and/or offline snapshot includes flight information and manifest data or information from which flight information and manifest data can be determined for its respective travel service; and/or
the travel facility is an airport and wherein the one or more travel services are flights.

14. A self-service terminal (13, 14) configured to communicate with the offline departure control system (11) of the passenger processing system (10) of any one of claims 1 to 7, wherein the self-service terminal (13, 14) is arranged to enable passengers to undertake self-service for one or more passenger operations.

15. A self-service terminal (13, 14) as claimed in claim 14, wherein, during a particular instance of a passenger undertaking self-service for one or more passenger operations in relation to a particular flight, the self-service terminal (13, 14) is configured to determine a status of the particular flight selected from an online status and an offline status, and wherein the self-service terminal (13, 14) is configured to communicate with the offline departure control system upon determining that the flight has an offline status.
